Europäisches Patentamt

European Patent Office

Office européen des brevets

(11) Veröffentlichungsnummer: **0 126 804**
**A2**

(12) **EUROPÄISCHE PATENTANMELDUNG**

(21) Anmeldenummer: **83111725.4**

(22) Anmeldetag: **23.11.83**

(51) Int. Cl.³: **H 02 K 23/02**

(30) Priorität: **20.05.83 DE 3318558**

(43) Veröffentlichungstag der Anmeldung:
**05.12.84 Patentblatt 84/49**

(84) Benannte Vertragsstaaten:
**AT BE CH DE FR GB IT LI LU NL SE**

(71) Anmelder: **Heitz, Christoph K.**
**Grünwalder Strasse 152a**
**D-8000 München 90(DE)**

(72) Erfinder: **Krüger, Klaus Dieter**
**Bergwiesen 11**
**D-7101 Löwenstein(DE)**

(54) **Schaltung einer elektrischen Motor/Generatormaschine mit Rückladung.**

(57) Es wird die Schaltung einer Motor-Generator-Maschine angegeben, die mit verbessertem Wirkungsgrad elektrische und mechanische Energie abgibt.

Fig.1

EP 0 126 804 A2

## Schaltung einer elektrischen Motor/Generatormaschine mit Rückladung

Die Erfindung betrifft die Schaltung einer elektrischen
Motor/Generator-Gleichstrommaschine in Haupt- oder Nebenschluß mit wenigstens zwei Feldwicklungen.

Elektrische Maschine verwandeln mechanische in elektrische
Energie oder umgekehrt oder formen elektrische Energie
in elektrische Energie unterschiedlicher Frequenz oder
anderer Kennliniencharakteristik in Bezug auf die treibende
Quelle um. Solche Maschinen unterliegen Ohm'schen und
Strahlungsverlusten, so daß der Maschinenwirkungsgrad stets
nur zwischen 50 und 75 % liegt. Wegen der Verluste sind
auch die Wicklungen stets überzudimensionieren.
Die Gegen-EMK führt zum sogenannten Bürstenfeuer, das
wiederum mit verschiedenen Maßnahmen unterdrückt werden
muß, woraus eine weitere Minderung des Wirkungsgrades
resultiert.

Ziel der vorliegenden Erfindung ist es, eine elektrische
Gleichstrommaschine der oben genannten Art anzugeben, die
mechanische und elektrische Energie mit verbessertem
Wirkungsgrad abgibt.

Diese Aufgabe wird durch die kennzeichnenden Merkmale des
Patentanspruchs 1 gelöst. Vorteilhafte Weiterbildungen der
Erfindung sind Gegenstand der Unteransprüche.

Die erfindungsgemäße Maschine geht somit von den bisher
bekannten Formen von Motor, Generator oder Umrichter aus
und löst die gestellte Aufgabe durch eine Veränderung der
Schaltung ihrer Komponenten.

Die Erfindung soll nachfolgend unter Bezugnahme auf die Zeichnungen näher erläutert werden.

Es zeigt:

Fig. 1 eine Prinzipdarstellung einer erfindungsgemäßen Maschine, und

Fig. 2 bis 4 verschiedene Schaltschemen mit einer Maschine nach Fig. 1.

Fig.5u.6 Zwei Schaltschemen für die Verwendung der entnehmbaren elektrischen Energie zur Ladung von Akkumulatoren.

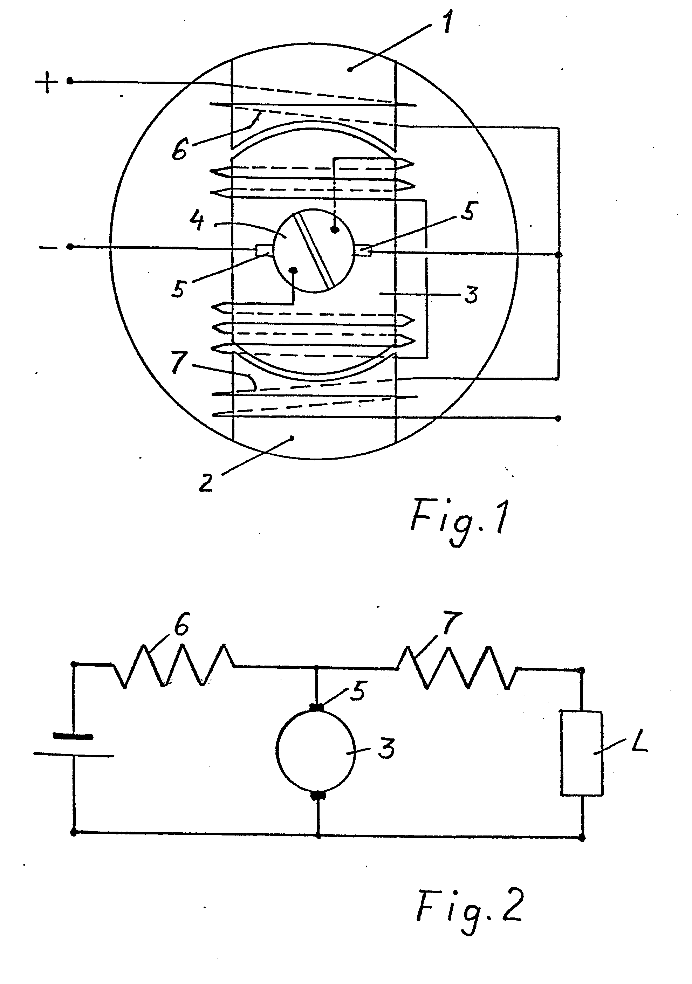

Die in Fig. 1 dargestellte Maschine ist eine Gleichstromhauptschlußmaschine mit zwei Feldpolen 1 und 2, einem Anker 3 mit Kommutator 4 und Bürsten 5.

Die Versorgung der Ankerwicklung mit Strom geschieht über die Bürsten 5 und den Kommutator 4 stets so, daß der Fluß im Anker etwa quer zum Erregerfluß verläuft. Dies ist energetisch der ungünstigste Zustand, das System versucht einen energetisch günstigeren Zustand einzunehmen und bewegt daher den Anker. Eine Drehbewegung kommt zustande. Dies ist der Stand der Technik.

Die erfindungsgemäße Maschine nach Fig. 1 geht von in ihrer Funktion getrennten Feldwicklungen aus. Die Feldwicklung 6 auf dem Pol 1 ist entsprechend Fig. 1 in Reihe mit der Ankerwicklung geschaltet. Die Maschine ist - bekanntermaßen - auch mit nur einer Feldwicklung betriebsfähig. Die Versorgungsgleichspannung wird an das freie Ende der Feldwicklung 6 und an jene Bürste angelegt, die nicht mit dem anderen Ende der Feldwicklung 6 verbunden ist. Die zweite Feldwicklung 7, die sich auf dem Pol 2 befindet, ist gegenläufig zur ersten Feldwicklung 6 gewickelt oder geschaltet in der Weise, daß ein von dieser Feldwicklung hervorgerufener
magnetischer Flußvektor zu jenem entgegengerichtet ist, der
von der ersten Feldwicklung 6 hervorgerufen wird.
Das eine Ende der Feldwicklung 7 ist mit jener Bürste
verbunden, die mit der ersten Feldwicklung 6 verbunden
ist. Ein Stromfluß durch die zweite Feldwicklung 7 kann
hervorgerufen werden, indem zwischen ihr freies Ende
und die andere Bürste, d.h. jene, die mit der Spannungsquelle verbunden ist, eine Last L geschaltet wird. Eine
solche Schaltung ist in Fig. 2 angegeben.
Besonders günstige Eigenschaften ergeben sich, wenn der
Ankerkern aus Weicheisen hergestellt ist.

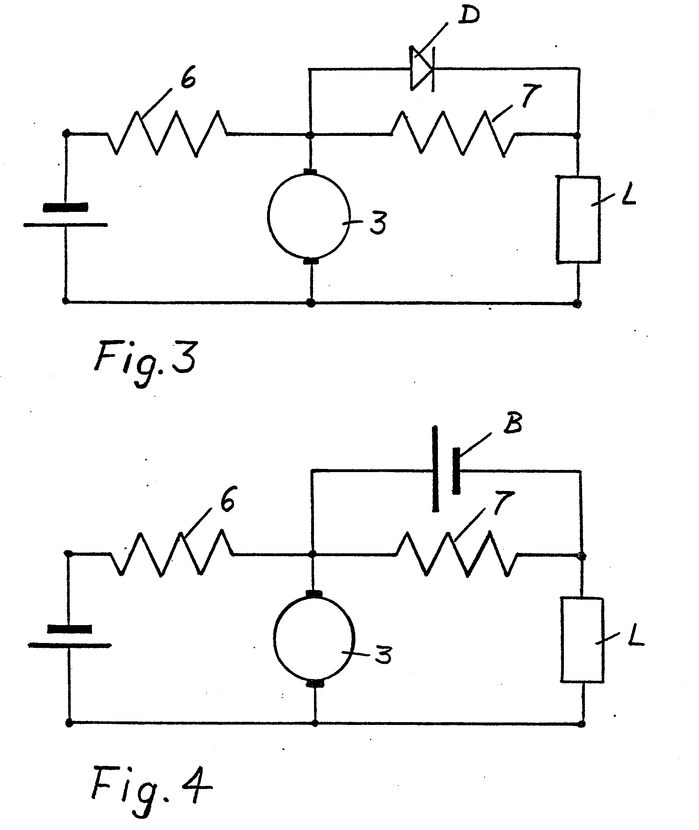

Eine weitere Verbesserung des Wirkungsgrades wird durch
die Parallelschaltung eines Gleichrichters D zur Feldwicklung 7 erreicht. Dieser Gleichrichter D schließt die
durch den Ankerumlauf in der Wicklung 7 erzeugte EMK
halbphasig kurz. Der ursprüngliche, dem Fluß der Wicklung
6 entgegengerichtete magnetische Fluß wird dadurch gestärkt. Eine solche Schaltung ist in Fig. 3 angegeben.

Als Alternative zur vorgenannten Art der Verbesserung
des Wirkungsgrades ist es gemäß Fig. 4 möglich, statt des
Gleichrichters D eine Gleichspannungsquelle B über die
Wicklung 7 der Maschine zu schalten. Die Polung dieser
Gleichspannungsquelle B ist derart gewählt, daß der von
der Gegen-EMK hervorgerufene magnetische Fluß im Pol 2
ganz oder teilweise neutralisiert wird.

Als elektrischer Verbraucher kommen Ohm'sche und
induktive oder kapazitive Lasten in Betracht. Eine sinnvolle Anwendung ergibt sich z.B. im Zusammenhang mit
Wärmepumpen, die mechanische Leistung für den Kompressor
und ergänzend dazu Wärmeleistung gebrauchen.

Der Gesamtwirkungsgrad der erfindungsgemäßen Schaltung
wird dann sehr hoch.

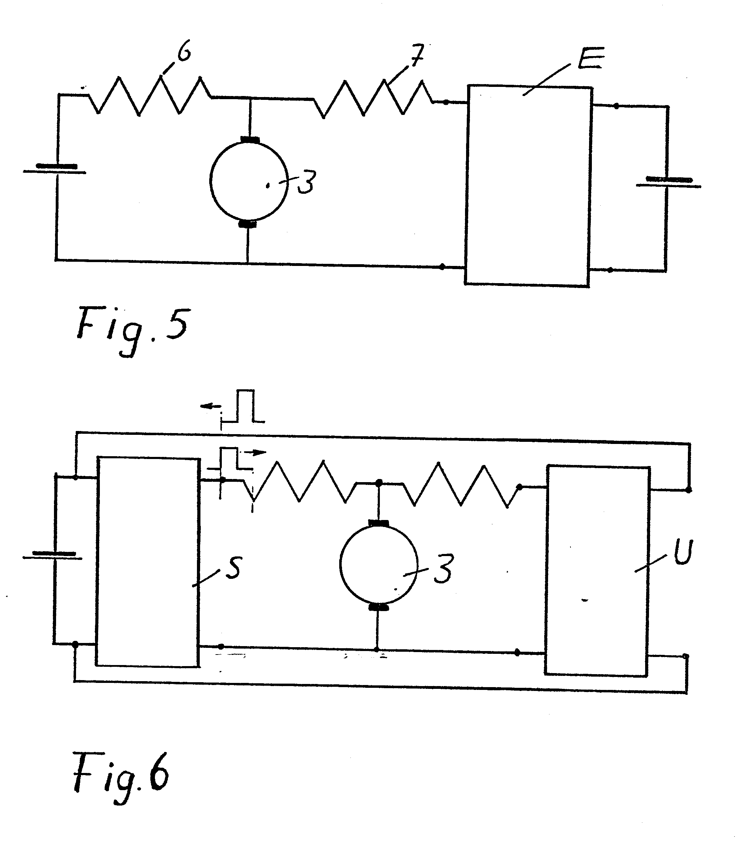

Wenn in einer Anwendung nur mechanische Leistung gewünscht
wird, läßt sich der zu entnehmende Strom in einen
Akkumulator laden. Ein solcher Art aufgebautes Gesamtschaltschema zeigt Fig. 5. Da bei gleicher Windungszahl der Wicklung auf beiden Polen eines Polpaares in
der erfindungsgemäßen Schaltung die Entnahmespannung
niedriger ist als die Spannung des speisenden Akkumulators,
muß eine Elektronik zur Spannungsangleichung (E) dazwischengeschaltet werden. In einer Anwendung der erfindungsgemäßen Schaltung läßt sich dann mit elektronischen
Mitteln oder über Relais der speisende Akku mit dem geladenen Akku tauschen bis die Ladung in beiden Akkumulatoren
so weit abgesunken ist, daß die Maschine nicht mehr
läuft.

In einer weiteren Ausformung der Erfindung wird die
Zuleitung der Speisespannungsquelle durch eine entsprechende Elektronikschaltung (S) periodisch ein- und
ausgeschaltet. Bei einem Impuls/Pause-Verhältnis von
z.B. 1:1 kann die Arbeitsweise der lastseitigen Elektronik
(U) so gestaltet werden, daß sie die entnehmbare elektrische
Energie während der Impulspausen in den speisenden
Akkumulator zurücklädt.

## A N S P R Ü C H E

1. Schaltung einer elektrischen Motor/Generator-Haupt-
oder Nebenschlußmaschine mit wenigstens einem Polpaar,
dadurch gekennzeichnet, daß einerseits zwischen den
Polen eines Polpaares keine magnetischen Brücken bebestehen und andererseits die Feldwicklung (7) des
einen Pols eines Polpaares gegenläufig der Feldwicklung
(6) des anderen Poles dieses Polpaares gewickelt ist,
so daß die in Betrieb von den Feldwicklungen im Stator
und/oder im Rotor erzeugten Flüsse einander entgegengerichtet sind und die Feldwicklung (7) des eines Poles
eines Polpaares mit einem Verbraucher in Reihe parallel
zum Anker angeordnet ist.

2. Schaltung einer elektrischen Maschine nach Anspruch 1,
dadurch gekennzeichnet, daß zu einer der Wicklungen
(7) der Stator oder zu Wicklungen des Rotors ein
Gleichrichter oder Transistor oder ein ähnliches Bauelement (G) parallel geschaltet und derart gepolt ist,
daß der durch die Gegen-EMK hervorgerufene magnetische
Fluß aufgehoben wird.

3. Schaltung einer elektrischen Maschine nach Anspruch 1, dadurch gekennzeichnet, daß die mit der Last (L) in Reihe geschaltete Feldwicklung (7) an eine eigene Gleichspannungsquelle (B) mit derartige Polarität geschaltet ist, daß ein Gegenfeld erzeugt wird, das den vom Rotor in der Feldwicklung durch die EMK verursachten magnetischen Fluß aufhebt.

4. Schaltung einer elektrischen Maschine nach Anspruch 1, dadurch gekennzeichnet, daß der Rotor einen Kern aus Weicheisen enthält.

5. Anordnung nach vorstehenden Ansprüchen, dadurch gekennzeichnet, daß der Verbraucher eine elektronische Schaltung darstellt, die die entnehmbare elektrische Energie in eine solche Form bringt, daß sie zur Ladung eines elektrischen Akkumulators benutzt werden kann.

6. Anordnung nach vorstehenden Ansprüchen, dadurch gekennzeichnet, daß die elektrische Schaltung mit Hilfe elektronischer Mittel im Impulsbetrieb aus einem Akku z.B. bei einem Impuls/Pause-Verhältnis von 1:1 gespeist wird und in den Impulspausen von der lastseitig angeordneten Elektronik elektrische Energie in passender Impulsform zurück in den Akkumulator gespeist wird.

0126804

1/3

Fig.1

Fig.2

**Fig.3**

**Fig.4**

Fig.5

Fig.6